# EUROPEAN PATENT APPLICATION

(11) **EP 4 640 859 A1**
(43) Date of publication of application: **29.10.2025**
(21) Application number: 25167757.1
(22) Date of filing: 01.04.2025
(51) Int. Cl.: C22C 14/00, B22F 3/15, B22F 5/00, B33Y 70/00, C22C 1/04

(54) **TITANIUM ALLOY AND METHOD OF MANUFACTURE**

(30) Priority: 24.04.2024 GB 202405730
(71) Applicant: Rolls-Royce plc, London N1 9FX (GB)
(72) Inventor: Dye, David, Derby, DE24 8BJ (GB); Martin, Nigel, Derby, DE24 8BJ (GB); Collins, Christopher, Derby, DE24 8BJ (GB)
(74) Representative: Rolls-Royce plc

(57) **Abstract**

A titanium alloy comprising 1.50 to 7.00 wt.% aluminium, 3.00 to 5.00 wt.% vanadium, 1.00 to 3.00 wt.% molybdenum; 0.50 to 2.50 wt.% zirconium, 0.05 to 0.40 wt.% oxygen, 0.05 to 2.00 wt.% tin, 0.00 to 1.00 wt.% iron, 0.00 to 0.3 wt% silicon, 0.01 to 0.15 wt.% carbon, and 0.001 to 0.05 wt.% nitrogen; the balance being titanium and incidental elements and unavoidable impurities. Such a titanium alloy is useful for manufacturing gas turbine engine components including compressor disks, bladed disks, or casings.

## Description

### FIELD OF THE DISCLOSURE

The present disclosure relates to a titanium alloy and a method of preparing same. The titanium alloy is useful for manufacturing titanium alloy articles, for example titanium alloy components of gas turbine engines.

### BACKGROUND

Titanium, Ti, is the 22^{nd} element of the Periodic Table of Elements. It is a transition metal with notably high strength and corrosion resistance. It is commonly used as a catalyst in the form of titanium dioxide, titanium trichloride or titanium tetrachloride. However, it is also often alloyed with aluminium, vanadium, molybdenum, chromium or other elements to manufacture strong and lightweight materials for various aerospace, automotive, medical and other industrial applications.

In the 1950s titanium alloys replaced steel as the material of choice for many aerospace components as they offered corrosion resistance as well as reduced density and therefore reduced weight. Nevertheless, titanium alloys are known to be prone to various stress and wear conditions when used in the manufacture of gas turbine engine components as such components can be exposed to extremely high and/or extremely low temperatures for sustained periods during operation of the gas turbine engine. The safety of passengers and crew on aircraft powered by such engines depends on the gas turbine engine components remaining fully functional or being repaired or replaced in a timely manner. The issue is acute as titanium alloys can account for a third of the structural weight of a gas turbine engine.

Cold dwell fatigue (CDF) is a particular concern for titanium gas turbine engine components. Despite being identified in the 1970s, many aspects of the underlying physical chemistry have yet to be understood.

The present disclosure provides a titanium alloy with improved cold dwell fatigue resistance, or at least provides a useful alternative to known titanium alloys.

### SUMMARY

The present disclosure provides a titanium alloy, a titanium alloy component, a method of preparing a titanium alloy, and a method of preparing a titanium alloy component, as set out in the appended claims.

According to a first aspect there is provided a titanium alloy comprising the following composition: 1.50 to 7.00 wt.% aluminium, 3.00 to 5.00 wt.% vanadium, 1.00 to 3.00 wt.% molybdenum; 0.50 to 2.50 wt.% zirconium, 0.05 to 0.40 wt.% oxygen, 0.05 to 2.00 wt.% tin, 0.00 to 1.00 wt.% iron, 0.00 to 0.30 wt.% silicon, 0.01 to 0.15 wt.% carbon, and 0.001 to 0.05 wt.% nitrogen; the balance being titanium, incidental elements and unavoidable impurities.

The titanium alloy of the present disclosure provides improved cold dwell fatigue resistance.

In some embodiments, the titanium alloy comprises: 1.75 to 7.00 wt.% aluminium, 3.25 to 4.75 wt.% vanadium, 1.25 to 2.75 wt.% molybdenum; 0.70 to 2.20 wt.% zirconium, 0.10 to 0.30 wt.% oxygen, 0.10 to 1.50 wt.% tin, 0.00 to 0.70 wt.% iron, 0.00 to 0.30 wt.% silicon, 0.01 to 0.12 wt.% carbon, and 0.001 to 0.04 wt.% nitrogen; the balance being titanium, incidental elements and unavoidable impurities.

In some embodiments, the titanium alloy comprises: 2.00 to 7.00 wt.% aluminium, 3.50 to 4.50 wt.% vanadium, 1.50 to 2.50 wt.% molybdenum, 0.90 to 1.90 wt.% zirconium, 0.15 to 0.25 wt.% oxygen, 0.20 to 1.30 wt.% tin, 0.00 to 0.40 wt.% iron, 0.01 to 0.30 wt.% silicon, 0.03 to 0.10 wt.% carbon, and 0.001 to 0.03 wt.% nitrogen; the balance being titanium, incidental elements and unavoidable impurities.

In some embodiments, the titanium alloy comprises: 1.50 to 4.50 wt.% aluminium, 3.00 to 5.00 wt.% vanadium, 1.00 to 3.00 wt.% molybdenum; 0.50 to 2.50 wt.% zirconium, 0.05 to 0.40 wt.% oxygen, 0.05 to 2.00 wt.% tin, 0.00 to 1.00 wt.% iron, 0.01 to 0.15 wt.% carbon, and 0.001 to 0.05 wt.% nitrogen; the balance being titanium, incidental elements and unavoidable impurities.

In some embodiments, the titanium alloy comprises: 1.75 to 4.25 wt.% aluminium, 3.25 to 4.75 wt.% vanadium, 1.25 to 2.75 wt.% molybdenum; 0.70 to 2.20 wt.% zirconium, 0.10 to 0.30 wt.% oxygen, 0.10 to 1.50 wt.% tin, 0.00 to 0.70 wt.% iron, 0.01 to 0.12 wt.% carbon, and 0.001 to 0.04 wt.% nitrogen; the balance being titanium, incidental elements and unavoidable impurities.

In some embodiments, the titanium alloy comprises: 2.00 to 4.00 wt.% aluminium, 3.50 to 4.50 wt.% vanadium, 1.50 to 2.50 wt.% molybdenum, 0.90 to 1.90 wt.% zirconium, 0.15 to 0.25 wt.% oxygen, 0.20 to 1.30 wt.% tin, 0.00 to 0.40 wt.% iron, 0.03 to 0.10 wt.% carbon, and 0.001 to 0.03 wt.% nitrogen; the balance being titanium, incidental elements and unavoidable impurities.

In some embodiments, the titanium alloy is in a powder form that is suitable for use in a powder-based manufacturing process.

In some embodiments, the titanium alloy is in the form of a powder suitable for use in hot isostatic pressing (HIP) or metal injection moulding (MIM).

In some embodiments, the titanium alloy is in a physical form that is suitable for use in an additive manufacturing process.

In some embodiments, the titanium alloy is in a physical form that is suitable for use in forged or rolled components. Forging methods include but not limited to hot die, hammer and isothermal forging.

The titanium alloy of the present disclosure may also be used in casting and the manufacture of metal matrix composites, including long fibre and particulate reinforced material.

In some embodiments, the titanium alloy is in the form of a wire, a rod or a powder.

According to a second aspect there is provided a titanium alloy article that comprises the titanium alloy of the first aspect.

In some embodiments, the titanium alloy article is a gas turbine component.

In some embodiments, the gas turbine component is a compressor disk, a bladed disk, a drum, an aerostructure, a fan bade, a compressor disk, a compressor vane, a mount ring or a casing.

According to a third aspect there is provided a method of preparing a titanium alloy of the first aspect, the method comprising: combining the elements in the amounts of the first aspect; and casting the combination to form a titanium alloy of the first aspect.

According to a fourth aspect there is provided a method of preparing a titanium alloy article of the second aspect, the method comprising casting the article from a titanium alloy of the first aspect in solid form, forging, or applying energy to a titanium alloy in powder form in an additive manufacturing process.

The skilled person will appreciate that, except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The term "alloy" as used herein means a mixture of chemical elements of which at least one is a metal. For example brass is an alloy of copper and zinc, sterling silver is an alloy of silver and copper, steel is an alloy of iron and carbon, and silicon steel is an alloy of iron and silicon.

The term "dwell fatigue" as used herein means the phenomenon where a load hold at applied peak stress during cyclic loading results in reduction in fatigue life by a decade or more compared with conventional fatigue without the hold period. This life reduction can be quantitatively characterized with dwell debit, i.e., the ratio of low cycle fatigue (LCF) life to dwell-fatigue life. A large dwell debit means the alloy is dwell sensitive with apparent dwell effect.

The term "cold dwell fatigue (CDF)" as used herein means dwell fatigue that occurs at a temperature from - 40 °C and 200 °C, e.g. in gas turbine engine components including fan discs, fan blades, stator vanes compressor discs and compressor blades.

The term "sintering" as used herein means the process of compacting and forming a solid mass of material by heat or pressure without melting it to the point of liquefaction.

The term "field assisted sintering", "field assisted sintering technique/technology", or "FAST" as used herein means a low voltage, direct current (DC) pulsed current activated, pressure-assisted sintering, and synthesis technique. Field assisted sintering is also known as spark plasma sintering (SPS), pulsed electric current sintering (PECS) and plasma pressure compaction (P2C).

Throughout this specification and in the claims that follow, unless the context requires otherwise, the word "comprise" or variations such as "comprises" and "comprising", will be understood to imply the inclusion of a stated integer or group of integers but not the exclusion of any other stated integer or group of integers.

### BRIEF DESCRIPTION OF THE DRAWINGS

Embodiments will now be described by way of example only, with reference to the Figures, in which:

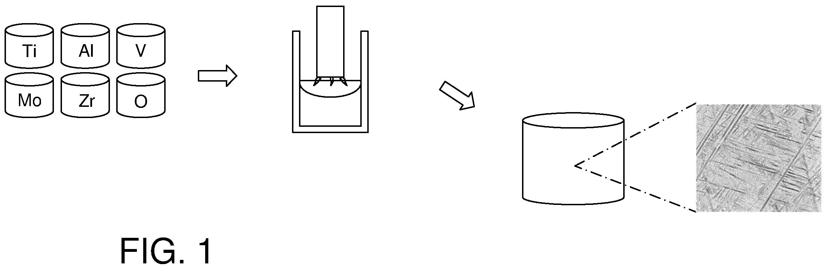

FIG. 1 is a schematic representation of the method of preparing a titanium alloy of the present disclosure.

### DETAILED DESCRIPTION

Aspects and embodiments of the present disclosure will now be discussed with reference to the accompanying figures. Further aspects and embodiments will be apparent to those skilled in the art.

The present disclosure provides a titanium alloy, a titanium alloy component, a method of preparing a titanium alloy, and a methods of preparing a titanium alloy component.

### The new titanium alloy

The titanium alloy of the present disclosure comprises the following composition: 1.50 to 7.00 wt.% aluminium, 3.00 to 5.00 wt.% vanadium, 1.00 to 3.00 wt.% molybdenum; 0.50 to 2.50 wt.% zirconium, 0.05 to 0.40 wt.% oxygen, 0.05 to 2.00 wt.% tin, 0.00 to 1.00 wt.% iron, 0.00 to 0.30 wt.% silicon, 0.01 to 0.15 wt.% carbon, and 0.001 to 0.05 wt.% nitrogen; the balance being titanium and incidental elements and unavoidable impurities.

Other alloy elements which may be present in the aforementioned titanium alloy as impurities, for example, selected from any of the following: Si, P, Mg, Cu, Nb, Hf, Bi, Ru, Pd, Y, Co, Ta, Ni, B, Mn, W and/or Zn should each have a wt.% of less than 0.1, with the sum of all impurities being less than 0.4 wt.%.

Being a very reactive element, titanium can be a difficult material to obtain and process. Its crystal structure at ambient temperature and pressure is close-packed hexagonal α phase with a c/a ratio of 1.587. However at about 890 °C, titanium undergoes an allotropic transformation to a body-centred cubic β phase which remains stable to the melting temperature. Certain alloying elements known as α stabilizers can raise the α-to-β transition temperature and other alloying elements known as β stabilizers can lower the transition temperature.

Titanium alloys can be categorised into four main groups: (1) α alloys that contain neutral alloying elements, e.g. tin, and/or α stabilisers, e.g. aluminium or oxygen, only. Such alloys are not heat treatable; (2) Near-α alloys that contain small amounts of ductile β phase and β phase stabilisers such as molybdenum, iron or vanadium. (3) α and β alloys that are metastable and generally include some combination of both α and β stabilisers. Such alloys are heat treatable; and (4) α and near β alloys that are metastable and contain sufficient β stabilisers, e.g. molybdenum, iron and vanadium, to allow them to maintain the β phase when quenched, and can also be solution treated and aged to improve strength.

The titanium alloy of the present disclosure is an α and β alloy.

Commercially available α and β titanium alloys include Ti-6Al-4V and Ti-6246, which can typically be produced in ingot form via melt or hot isostatic pressing (HIP) routes and then forged and machined to a desired shape and geometry. Ti-6Al-4V comprises 6.0 to 6.7 wt.% aluminium, 3.8 to 4.5 wt.% vanadium, 0.00 to 0.30 wt.% iron, 0.17 to 0.23 wt.% oxygen, 0.001 to 0.03 wt.% nitrogen, and 0.01 to 0.1 wt.% carbon, the balance being titanium and incidental elements and unavoidable impurities. Ti-6246 comprises 5.5 to 6.5 wt.% aluminium, 5.5 to 6.5 wt.% molybdenum, 1.75 to 2.25 wt.% tin, 3.5 to 4.5 wt.% zirconium, 0.00 to 0.15 wt.% iron, 0.07 to 0.12 wt.% oxygen, 0.001 to 0.04 wt.% nitrogen, 0.01 to 0.04 wt.% carbon, and 0.00 to 0.04 wt.% silicon, the balance being titanium and incidental elements and unavoidable impurities.

The titanium alloy of the present disclosure, which is in solid form, shows improved cold dwell fatigue resistance that is especially suitable for its use in the manufacture of titanium alloy articles, for example of titanium alloy gas turbine engine components including fan discs, fan blades, stator vanes compressor discs and compressor blades.

Cold dwell fatigue in titanium is a phenomenon well known in the aerospace industry because it has been implicated in a number of uncontained, in-service failures of fracture-critical rotating components like fan and compressor disks. Cold dwell fatigue is a type of loading where a hold at high stress is imposed between alternating unload and reload. This type of hold, or dwell, at high peak stress can occur at any time during the flight, but the highest magnitudes are typically encountered during the take-off, climb, and landing phases. The additional damage sustained during the hold at high stress can result in early crack nucleation and fast crack propagation resulting in failure earlier than would be expected during cycling without the dwell period. The modifier 'cold' emphasizes that the issue occurs in a relatively cool part of the engine. As such, susceptible components include fan and compressor disks.

Wu et al reviewed research in this area in "Recent developments in cold dwell fatigue of titanium alloys for aero-engine applications: a review", Journal of Materials Research and Technology, 2022, vol. 20, pages 469-484.

The improved performance can enable gas turbine engine components formed from the titanium alloy of the present disclosure to enable the gas turbine engine to be operated with longer effective life, greater efficiency, and improved specific fuel consumption (SFC). It may even allow gas turbine engine components to be re-designed in a manner that includes less material, thereby reducing weight to improve specific fuel consumption (SFC) and save resources.

While not wanting to be bound by theory, the favourable cold dwell fatigue resistance of the titanium alloy of the present disclosure may be attributed to the careful balance of the relative effects of elements contributing to the aluminium and molybdenum equivalent values. Research by the current inventors have shown, for example, that the level of aluminium and aluminium equivalent are key drivers for dwell susceptibility. The current inventors have taken the approach of wanting to utilise both advanced thermomechanical processing and tailored chemistry to provide two routes to reducing the risk of cold dwell susceptibility, thereby increasing cold dwell fatigue resistance. Increasing levels of aluminium within α + β titanium alloys can drive α₂ formation. Precipitation of the α₂ compound and its precursors, which has the nominal composition Ti₃Al but which also contains Sn and is also promoted by O, has recently been shown to occur at lower alloy contents than was historically thought to be the case. It has been shown to promote slip planarity, leading to a reduction in dwell fatigue performance. In the titanium alloy of the present disclosure, strengthening by bulk Al additions to the hcp alpha phase is substituted with microstructural (lengthscale) strengthening promoted by beta stabilising elements. Inclusion of β-stabilising elements, i.e. molybdenum equivalent, can contribute to changes in phase kinetics during thermomechanical processing, which can lead to optimised crystallographic texture leading to improved fatigue performance. In contrast, the inventors also take the approach of using O as a strengthener that promotes a variety of deformation mechanisms rather than just a single slip band.

Molybdenum is added in preference to V as excessive V contents lead to concerns about alloy cost and the potential future demand for V resources, e.g. by flow battery technologies. In addition Mo diffuses much more slowly in Ti than V and therefore promotes fine-scale, multi-variant secondary alpha microstructures. The limit of Mo is imposed to avoid making the beta transus so low that Tl-6Al-4V inertia welds become difficult to manufacture and to avoid the formation of grain boundary alpha at the prior beta grain boundaries, which lead to reduced fatigue lifetime.

Zirconium is understood to provide increased strength, particularly at elevated temperatures.

Oxygen is typically naturally present in titanium alloys and can be added to provide a desired chemistry.

Tin is understood to provide increased strength, particularly at elevated temperatures.

Iron is understood to provide increased strength, particularly at elevated temperatures, and can improve hot working processing flexibility, perhaps by increasing the temperature width of the alpha + beta phase field.

Silicon is understood to provide increased strength but at high levels, e.g. above 0.50 wt.% can lead to silicon segregation problems.

Carbon is typically naturally present in titanium alloys and can be added to provide a desired chemistry.

Nitrogen is typically present in titanium alloys, often because it may be picked-up during any vacuum melting steps involved with the production of the titanium alloy.

In some embodiments the titanium alloy of the present disclosure comprises: 1.75 to 7.00 wt.% aluminium, 3.25 to 4.75 wt.% vanadium, 1.25 to 2.75 wt.% molybdenum; 0.70 to 2.20 wt.% zirconium, 0.10 to 0.30 wt.% oxygen, 0.10 to 1.50 wt.% tin, 0.00 to 0.70 wt.% iron, 0.00 to 0.30 wt.% silicon, 0.01 to 0.12 wt.% carbon, and 0.001 to 0.04 wt.% nitrogen; the balance being titanium, incidental elements and unavoidable impurities.

In some embodiments, the titanium alloy of the present disclosure comprises: 2.00 to 7.00 wt.% aluminium, 3.50 to 4.50 wt.% vanadium, 1.50 to 2.50 wt.% molybdenum, 0.90 to 1.90 wt.% zirconium, 0.15 to 0.25 wt.% oxygen, 0.20 to 1.30 wt.% tin, 0.00 to 0.40 wt.% iron, 0.01 to 0.30 wt.% silicon, 0.03 to 0.10 wt.% carbon, and 0.001 to 0.03 wt.% nitrogen; the balance being titanium, incidental elements and unavoidable impurities.

In some embodiments the titanium alloy of the present disclosure comprises the following composition: 1.50 to 4.50 wt.% aluminium, 3.00 to 5.00 wt.% vanadium, 1.00 to 3.00 wt.% molybdenum; 0.50 to 2.50 wt.% zirconium, 0.05 to 0.40 wt.% oxygen, 0.00 to 2.00 wt.% tin, 0.00 to 1.00 wt.% iron, 0.01 to 0.15 wt.% carbon, and 0.001 to 0.05 wt.% nitrogen; the balance being titanium and incidental elements and unavoidable impurities.

In some embodiments the titanium alloy of the present disclosure comprises the following composition: 1.75 to 4.25 wt.% aluminium, 3.25 to 4.75 wt.% vanadium, 1.25 to 2.75 wt.% molybdenum; 0.70 to 2.20 wt.% zirconium, 0.10 to 0.30 wt.% oxygen, 0.10 to 1.50 wt.% tin, 0.00 to 0.70 wt.% iron, 0.01 to 0.12 wt.% carbon, and 0.001 to 0.04 wt.% nitrogen; the balance being titanium, incidental elements and unavoidable impurities.

In some embodiments the titanium alloy of the present disclosure comprises the following composition: 2.00 to 4.00 wt.% aluminium, 3.50 to 4.50 wt.% vanadium, 1.50 to 2.50 wt.% molybdenum, 0.90 to 1.90 wt.% zirconium, 0.15 to 0.25 wt.% oxygen, 0.20 to 1.30 wt.% tin, 0.00 to 0.40 wt.% iron, 0.03 to 0.10 wt.% carbon, and 0.001 to 0.03 wt.% nitrogen; the balance being titanium, incidental elements and unavoidable impurities.

Sn and Zr are added into the alloy to promote strength retention with temperature and to allow the alloy to be used further into the compressor, as opposed purely in applications at below 300 Celsius as for a fan alloy like Ti-6Al-4V. This allows for a single fan/compressor drum alloy to be used, e.g. in bladed discs. The amounts used are limited so as to avoid α₂ formation. The N level permitted is controlled as, like oxygen, excessive amounts can lead to embrittlement.

The titanium alloy of the present disclosure with the aforementioned compositional range is in the form of a solid. However, it may be converted to a physical form that is suitable for use in a desired manufacturing process using any suitable method known in the art.

In some embodiments the titanium alloy is in a powder form that is suitable for use in a powder-based manufacturing process, for example field assisted sintering technology (FAST), hot isostatic pressing (HIP) or metal injection moulding (MIM).

In some embodiments the titanium alloy is in a physical form that is suitable for use in an additive manufacturing process, for example the titanium alloy is in the form of a wire, a rod or a powder.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD), ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

### Articles made from the new titanium alloy

The titanium alloy article of the second aspect of the present disclosure comprises or in some instance consists of the titanium alloy of the first aspect of the present disclosure.

In some embodiments, the titanium alloy article is a gas turbine engine component. The gas turbine engine component may, for example, a compressor disk, a bladed disk, a casing, a fan blade or a stator.

In some embodiments, the titanium alloy article is a tool or it is piece of sporting equipment e.g. a golf club.

### Preparation of the new titanium alloy

The titanium alloy of the present disclosure can be prepared by casting same from the constituent elements. Such a method is schematically represented in FIG. 1 of the drawings.

The titanium alloy powder blend is sintered to form the titanium alloy of the present disclosure. The sintering can be performed using any suitable equipment and technique for the purpose.

In some embodiments the titanium alloy the powder mix is sintered using a field assisted sintering technique or "FAST". Such a sintering method involves low voltage, direct current (DC) pulsed current activated, pressure-assisted sintering. Field assisted sintering is also known as spark plasma sintering (SPS), pulsed electric current sintering (PECS) and plasma pressure compaction (P2C). The technique is described in N. S. Weston, F. Derguti, A. Tudball, and M. Jackson, "Spark plasma sintering of commercial and development titanium alloy powders," J. Mater. Sci., vol. 50, no. 14, pp. 4860-4878, 2015.

While not wanting to be bound by theory, the effect of the electric current during field assisted sintering is thought to enhance diffusion, which may be at least in part responsible for the favourable properties that have been observed when using field assisted sintering.

In some embodiments the titanium alloy powder mix is field assisted sintered using, a dwell temperature of 850 to 1200 °C, a dwell time of 0 to 90 minutes, a pressure range of between 20 and 50 MPa, a heating rate range of 25 to 200 °C/min, a cooling rate range of 10 to 200 °C/min, a pulse pattern of 15 ms on and 5 ms off.

Other sintering methods include powder sintering e.g. hot isostatic pressure (HIP) and additive manufacturing (AM).

In some embodiments the titanium alloy may be produced in solid form as a cast alloy which may be formed from the individual elements or from any combination of pre-alloyed mixes of the elements. Different casting methods for producing the alloy include, but are not limited to: Vacuum Arc Melting (VAM), Vacuum Arc Remelting (VAR), Cold Hearth Melting (CHM), Plasma Arc Melting (PAM), Wrought Processing (WP) and Vacuum Induction Melting (VIM).

In some embodiments the titanium alloy may be produced as a powder which is atomised with the chemistry matching the ranges described in the present disclosure. The feedstock for the atomisation processes (including Electrode Induction Gas Atomisation (EIGA) or Plasma Rotating Electrode Processing (PREP)) uses bars or ingots of the alloy that have been produced using the methods described above or wires which have been drawn down to specific diameters from these bars or ingots (e.g. Plasma Atomisation (PA)). Some atomisation processes may also produce the powder directly from the elements or combinations of the elements such as is the case in gas atomisation (GA) processes.

The composition of the titanium alloy of the present disclosure allows for a number of revert material streams as input. e.g. Ti-6Al-4V, Ti6242 and Ti6246. This can be useful as it means less virgin material may be needed during production.

### Preparation of gas turbine engine components from the new titanium alloy

The titanium alloy of the present disclosure is useful to manufacture titanium alloy articles, especially titanium alloy gas turbine engine components, including compressor discs, bladed disks, casings, fan blades or stators.

Titanium alloy articles of the second aspect, e.g. titanium alloy gas turbine engine components, can be prepared using a variety of manufacturing methods that are known in the art.

In some embodiments the titanium alloy is in a powder form that is suitable for use in a powder-based manufacturing process, for example field assisted sintering technology (FAST), hot isostatic pressing (HIP) or metal injection moulding (MIM).

In a powder-based manufacturing process a metal powder, which may be a shaped powder pre-form, is subjected to heat and pressure to melt or sinter the metal powder particles together to form the desired article, component or structure. For further information please refer to "Powder Metallurgy Technology" by G S Upadhyaya, Cambridge Int Science Publishing (1997); also "Powder Metallurgy", Chapter 4 in "A Textbook of Manufacturing Technology: Manufacturing Processes" by R K Rajput (2007); also "Powder Metallurgy; Science, Technology and Applications", P C Angelo and R Subramanian (2008), pub. PHI Learning Pvt. Ltd.; also W B James, "Powder Metallurgy Methods and Applications", in ASM Handbook (Ed. P Samal and J Newkirk), volume 7 (2015) pages 9 to 19, the contents of which are incorporated herein by reference.

In some embodiments the titanium alloy is in a physical form that is suitable for use in an additive manufacturing process, for example the titanium alloy is in the form of a wire, a rod or a powder.

In an additive manufacturing process for creating a metal article, component or structure, metal powder or a metal body such as, for example, a rod or wire is fed into a melt pool that is heated, typically by a laser, electron beam or plasma arc. The machine head moves the heat source and metal feed to deposit layers of metal in the desired shape, supported on a substrate or bed, which is suitably metallic. The process typically occurs in a vacuum or inert atmosphere to restrict oxidation of the metals. For further information please refer to "Additive Manufacturing Technologies" by Gibson, Rosen and Stucker (2015), published by Springer, the contents of which are incorporated herein by reference. For example, a review of directed energy deposition (DED) processes is contained in Gibson et al., "Directed Energy Deposition Processes", on pages 245-268 of the said "Additive Manufacturing Technologies"; the contents of that chapter are also specifically incorporated herein by reference. Also, C K Chua et al., "3D Printing and Additive Manufacturing" 4th Edition (2014), published by World Scientific Publishing Co.

A powder composition of, or comprising, the titanium alloy of the present disclosure, suitable for use in an additive manufacturing process or a powder-based manufacturing process for the production of gas turbine engine components, typically has a powder particle size (diameter) distribution that lies between about 10 and about 250 µm, and the particles are typically of substantially spherical shape.

The powder particle size distribution (PSD) required will vary dependent on the process employed. For example, with field assisted sintering (FAST) any PSD can be used, including, e.g. PSD ranges from < 45 microns to > 250 microns in several increments. It has been found that with a smaller PSD the FAST conditions (time and temperature) required for achieving a homogeneous mix can be reduced due to the smaller diffusion distances required, and vice-versa. However, when using an additive manufacturing (AM) process, stricter PSD limits tend to apply, depending on the specific process, a PSD in the region of 10 to 60 microns may be used.

In some embodiments the titanium alloy is in a physical form that is suitable for use in a manufacturing process selected from laser-based additive manufacturing (LBAM), direct laser deposition (DLD), Laser powder bed fusion (LPBF), Selective Laser Sintering (SLS) electron beam additive manufacturing (EBAM), laser engineered net shaping (LENS), selective laser melting (SLM), SLM three-dimensional printing (SLM 3D printing), direct metal laser sintering (DMLS), direct metal laser sintering three-dimensional printing (DML 3D printing), electron beam melting (EBM), direct metal deposition (DMD), direct metal tooling (DMT), direct metal tooling three-dimensional printing (DMT 3D printing), construction laser additive direct (CLAD) ion fusion formation (IFF), wire arc additive manufacturing (WAAM), shaped metal deposition (SMD), Laser Blown Powder Directed Energy Deposition (LBP-DED), flash sintering, cold spray and field assisted sintering technology (FAST).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

The titanium alloy of the present disclosure and its preparation and testing is described in the following illustrative examples with reference to the accompanying drawing.

### Example 1

### Preparation of titanium alloy powders

Titanium alloy powders are prepared by combining various elements in amounts that are listed in Table 1 below.

The quantities of Ti, Al, V, Mo, Zr and Sn are measured via Inductively Coupled Plasma - Optical Emission Spectroscopy (ICP-OES), the quantities of C are measured via combustion analysis and the quantities of N and O are measured via Inert Gas Fusion.

**TABLE 1**

| **Composition of titanium alloy powder** | | | |
|---|---|---|---|
| **Element** | **TAP1** | **TAP2** | **TAP3** |
| Ti (wt.%) | Balance 89.38 | Balance 88.79 | Balance 87.93 |
| Al (wt.%) | 3.00 | 2.50 | 3.50 |
| V (wt.%) | 4.00 | 4.00 | 4.00 |
| Mo (wt.%) | 2.00 | 2.00 | 2.00 |
| Zr (wt.%) | 1.50 | 1.40 | 1.40 |
| O (wt.%) | 0.05 | 0.20 | 0.20 |
| Sn (wt.%) | 0.05 | 0.70 | 0.70 |
| Fe (wt.%) | 0.00 | 0.35 | 0.20 |
| C (wt.%) | 0.01 | 0.05 | 0.06 |
| N (wt.%) | 0.00 | 0.004 | 0.004 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 2

### Preparation of titanium alloy powders

Titanium alloy powders are prepared by combining various elements in amounts that are listed in Table 2 below.

The quantities of Ti, Al, V, Mo, Zr and Sn are measured via Inductively Coupled Plasma - Optical Emission Spectroscopy (ICP-OES), the quantities of C are measured via combustion analysis and the quantities of N and O are measured via Inert Gas Fusion.

**TABLE 2**

| **Composition of titanium alloy powder** | | | |
|---|---|---|---|
| **Element** | **TAP4** | **TAP5** | **TAP6** |
| Ti (wt.%) | Balance 85.38 | Balance 84.69 | Balance 85.63 |
| Al (wt.%) | 7.00 | 6.50 | 5.50 |
| V (wt.%) | 4.00 | 4.00 | 4.00 |
| Mo (wt.%) | 2.00 | 2.00 | 2.00 |
| Zr (wt.%) | 1.50 | 1.40 | 1.40 |
| O (wt.%) | 0.05 | 0.20 | 0.20 |
| Sn (wt.%) | 0.05 | 0.70 | 0.70 |
| Fe (wt.%) | 0.00 | 0.35 | 0.20 |
| Si (wt %) | 0.00 | 0.10 | 0.30 |
| C (wt.%) | 0.01 | 0.05 | 0.06 |
| N (wt.%) | 0.00 | 0.01 | 0.01 |

The measured values for carbon, hydrogen, oxygen and nitrogen are all within acceptable limits.

The suitable wt.% of each element to be used using alternative ratios can be determined using ThermoCalc^{™} thermodynamic modelling software.

### Example 3

### Preparation of the titanium alloys

A titanium alloy of the present disclosure are prepared as follows:
Titanium alloy powders are prepared from each of the titanium alloy powders of Examples 1 and 2, added to a powder mixing device and mixed to form a homogenous titanium alloy powder.

In each case the powder is transferred to a cylindrical graphite mould for processing with field assisted sintering.

Each is sintered using a field assisted sintering technique in accordance with the parameters set out in Table 3 below.

**TABLE 3**

| Field assisted sintering conditions | |
|---|---|
| Dwell Time | 60 minutes |
| Dwell Temperature | 1200 °C |
| Pressure | 35 MPa |
| Pulse Pattern | 15 on, 5 off ms |
| Heating Rate | 50 °C/min |
| Cooling Rate | 10 °C/min |
| Mould Diameter | 250 mm |

In each case the resulting product is a solid titanium billet.

## Claims

1. A titanium alloy comprising the following composition:
| | |
|---|---|
| Al | 1.50 to 7.00 wt.%; |
| V | 3.00 to 5.00 wt.%; |
| Mo | 1.00 to 3.00 wt.%; |
| Zr | 0.50 to 2.50 wt.%; |
| O | 0.05 to 0.40 wt.%; |
| Sn | 0.05 to 2.00 wt.%; |
| Fe | 0.00 to 1.00 wt.%; |
| Si | 0.00 to 0.30 wt%; |
| C | 0.01 to 0.15 wt.%; and |
| N | 0.001 to 0.05 wt.%; |
the balance being Ti, incidental elements and unavoidable impurities.

2. The titanium alloy of claim 1, comprising the following composition:
| | |
|---|---|
| Al | 1.75 to 7.00 wt.%; |
| V | 3.25 to 4.75 wt.%; |
| Mo | 1.25 to 2.75 wt.%; |
| Zr | 0.70 to 2.20 wt.%; |
| O | 0.10 to 0.30 wt.%; |
| Sn | 0.10 to 1.50 wt.%; |
| Fe | 0.00 to 0.70 wt.%; |
| Si | 0.00 to 0.30 wt%; |
| C | 0.01 to 0.12 wt.%; and |
| N | 0.001 to 0.04 wt.%; |
the balance being Ti, incidental elements and unavoidable impurities.

3. The titanium alloy of claim 2, comprising the following composition:
| | |
|---|---|
| Al | 2.00 to 7.00 wt.%; |
| V | 3.50 to 4.50 wt.%; |
| Mo | 1.50 to 2.50 wt.%; |
| Zr | 0.90 to 1.90 wt.%; |
| O | 0.15 to 0.25 wt.%; |
| Sn | 0.20 to 1.30 wt.%; |
| Fe | 0.00 to 0.40 wt.%; |
| Si | 0.01 to 0.30 wt%; |
| C | 0.03 to 0.10 wt.%; and |
| N | 0.001 to 0.03 wt.%; |
the balance being Ti, incidental elements and unavoidable impurities.

4. The titanium alloy of claim 1, comprising the following composition:
| | |
|---|---|
| Al | 1.50 to 4.50 wt.%; |
| V | 3.00 to 5.00 wt.%; |
| Mo | 1.00 to 3.00 wt.%; |
| Zr | 0.50 to 2.50 wt.%; |
| O | 0.05 to 0.40 wt.%; |
| Sn | 0.05 to 2.00 wt.%; |
| Fe | 0.00 to 1.00 wt.%; |
| C | 0.01 to 0.15 wt.%; and |
| N | 0.001 to 0.05 wt.%; |
the balance being Ti, incidental elements and unavoidable impurities.

5. The titanium alloy of claim 4, comprising the following composition:
| | |
|---|---|
| Al | 1.75 to 4.25 wt.%; |
| V | 3.25 to 4.75 wt.%; |
| Mo | 1.25 to 2.75 wt.%; |
| Zr | 0.70 to 2.20 wt.%; |
| O | 0.10 to 0.30 wt.%; |
| Sn | 0.10 to 1.50 wt.%; |
| Fe | 0.00 to 0.70 wt.%; |
| C | 0.01 to 0.12 wt.%; and |
| N | 0.001 to 0.04 wt.%; |
the balance being Ti, incidental elements and unavoidable impurities.

6. The titanium alloy of claim 5, comprising the following composition:
| | |
|---|---|
| Al | 2.00 to 4.00 wt.%; |
| V | 3.50 to 4.50 wt.%; |
| Mo | 1.50 to 2.50 wt.%; |
| Zr | 0.90 to 1.90 wt.%; |
| O | 0.15 to 0.25 wt.%; |
| Sn | 0.20 to 1.30 wt.%; |
| Fe | 0.00 to 0.40 wt.%; |
| C | 0.03 to 0.10 wt.%; and |
| N | 0.001 to 0.03 wt.%; |
the balance being Ti, incidental elements and unavoidable impurities.

7. The titanium alloy of any preceding claim, wherein the titanium alloy is in a powder form that is suitable for use in a powder-based manufacturing process.

8. The titanium alloy of claim 7, wherein the titanium alloy is in the form of a powder suitable for use in hot isostatic pressing (HIP) or metal injection moulding (MIM).

9. The titanium alloy of any preceding claim, wherein the titanium alloy is in a physical form that is suitable for use in an additive manufacturing process.

10. The titanium alloy of claim 9, wherein the titanium alloy is in the form of a wire, a rod or a powder.

11. A titanium alloy article that comprises the titanium alloy of any preceding claim.

12. The titanium alloy article of claim 11 that is a gas turbine component.

13. The titanium alloy article of claim 12, wherein the gas turbine component is a compressor disk, a bladed disk, or a casing.

14. A method of preparing a titanium alloy of any one of claims 1 to 10, the method comprising:
combining the elements in the amounts of any one of claims 1 to 6; and
casting the combination to form a titanium alloy of any one of claims 1 to 6.

15. A method of manufacturing a titanium alloy article of any one of claims 11 to 13, the method comprising casting the article from a titanium alloy in solid form of any one of claims 1 to 10, or applying energy to a titanium alloy in powder form in an additive manufacturing process.
